(19) Europäisches Patentamt

European Patent Office

Office européen des brevets

(11) EP 1 491 785 A1

(12) **EUROPÄISCHE PATENTANMELDUNG**

(43) Veröffentlichungstag:
29.12.2004 Patentblatt 2004/53

(51) Int Cl.⁷: **F16D 13/58**, F16D 13/52,
F16D 13/71

(21) Anmeldenummer: 04014431.3

(22) Anmeldetag: 19.06.2004

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **25.06.2003 DE 10328426**

(71) Anmelder: **ZF Sachs Race Engineering GmbH
97424 Schweinfurt (DE)**

(72) Erfinder:
• **Rudolf, Thomas
97422 Schweinfurt (DE)**

• **Friedrich, Horst
97491 Happerthausen (DE)**
• **Fischer, Klaus
97437 Hassfurt (DE)**
• **Loibersbeck, Jürgen
97506 Grafenreinfeld (DE)**
• **Selzam, Werner
97537 Wipfeld (DE)**
• **Wittholz, Jan
97453 Schonungen (DE)**
• **Huisjes, Arnold
97424 Schweinfurt (DE)**

(54) **Elastische Anpresskraftübertragungsplatte und Herstellungsverfahren**

(57) Eine Anpresskraftübertragungsplatte (126) für eine Reibungskupplung umfasst einen ringartigen Plattenkörper (150) sowie wenigstens einen Beaufschlagungsbereich (152) zur Einleitung einer durch einen Kraftspeicher (130), vorzugsweise eine Membranfeder, bereitgestellten Kraft, wobei Plattenkörper (150) und Beaufschlagungsbereich (152) jeweils durch einen Verbindungsbereich (154) elastisch verbunden sind und wobei Plattenkörper (150) und Beaufschlagungsbereich (152) eine Schenkelfederanordnung bilden.

Fig. 2

EP 1 491 785 A1

**Beschreibung**

Die vorliegende Erfindung betrifft eine Anpresskraftübertragungsplatte für eine Reibungskupplung, umfassend einen ringartigen Plattenkörper und wenigstens einen Beaufschlagungsbereich zur Einleitung einer durch einen Kraftspeicher, vorzugsweise eine Membranfeder, bereitgestellten Kraft.

Bei Reibungskupplungen wird die durch einen beispielsweise membranfederartig ausgebildeten Kraftspeicher bereitgestellte Antriebskraft durch eine ringartig ausgebildete Anpressplatte auf die reibend miteinander in Wechselwirkung stehenden oder bringbaren Reiborgane übertragen. Insbesondere bei Reibungskupplungen, die im Rennsport eingesetzt werden, treten hohe Belastungen an den Reiborganen auf, die deswegen beispielsweise als Reiblamellen ausgebildet sind. Bei diesen Kupplungen ist es nicht möglich, die bei herkömmlichen Kupplungsscheiben vorgesehenen Belagsfederungen im Bereich der verschiedenen Reiborgane bereitzuhalten. Gerade derartige Belagsfederungen ermöglichen jedoch beim Einrücken der Kupplung einen mehr oder weniger allmählich auftretenden Einrückzustand und vermeiden ein stoßartiges, spontanes Ansteigen des Kupplungsmoments, Wodurch im normalen Fahrzeugbau ein vergleichsweise hoher Komfort erzielbar ist.

Auch im Rennsport besteht die Anforderung nach einem derartigen allmählich auftretenden Schließen der Kupplung, und zwar vor allem auch deswegen, weil dann das über die Kupplung übertragene Kupplungsmoment präziser eingestellt werden kann. In der Vergangenheit sind verschiedene Konzepte entwickelt worden, um auch im Bereich derartiger Kupplungen eine der Funktion der Belagsfederung herkömmlicher Kupplungen entsprechende Elastizität bereitstellen zu können.

Es ist bekannt, dass bei Reibungskupplungen zwischen Anpressplatte und einer die Anpressplatte beaufschlagenden Membranfeder elastische Federelemente angeordnet sein können. Wie z.B. die US 3 323 624 lehrt, können derartige Federelemente beispielsweise als spiralförmige Druckfedern, entsprechend gewölbte bzw. gebogene Blattfedern oder auch als wellenförmig ausgebildete Zwischenplatten oder -ringe ausgebildet sein. Weitere Beispiele für derartige Feder- bzw. Dämpfungselemente sind aus der US 4 095 683, US 4 635 779 oder EP 0 271 382 A1 bekannt. Bei allen diesen Anordnungen bewirkt die Beaufschlagung mit einer bestimmten Anpresskraft durch die Membranfeder, dass die in einem Zwischenraum zwischen Anpressplatte und Membranfeder angeordneten gewölbten oder gewellten Federelemente elastisch verformt werden, bis ab einer vorbestimmten Anpresskraft die Membranfeder an einem Anschlag der Anpressplatte anliegt.

Besonders häufig ist vorgeschlagen worden, zwischen Anpressplatte und einer diese beaufschlagende Membranfeder eine Teller- bzw. Scheibenfeder anzuordnen, siehe beispielsweise die EP 0 797 016 A2, US 5 022 508 oder US 5 385 224. Zur Beaufschlagung der Anpressplatte bewirkt bei diesen Anordnungen die Membranfeder zunächst primär eine Erhöhung der Tellerfederspannung, und über diese eine entsprechende Anpresskraft auf die Anpressplatte. Ab einer vorbestimmten Anpresskraft liegt die Tellerfeder schließlich an einem entsprechend an der Anpressplatte ausgebildeten Anschlag an, so dass ab diesem Punkt die Anpresskraft der Membranfeder direkt auf die Anpressplatte übertragen wird. Der Anschlag kann hierbei durch einen zweiten Auflagepunkt der Tellerfeder an der Anpressplatte gebildet sein (US 5 022 508) oder aber durch Anlage im Wesentlichen der gesamten Fläche der Tellerfeder an einer konisch (EP O 797 016 A2) oder gewölbt (US 5 385 224) ausgebildeten Fläche der Anpressplatte erzielt werden.

Bei allen genannten Anordnungen ist nachteilig, dass ein zusätzliches elastisch wirkendes Bauteil erforderlich ist. Dies führt vor allem zu einem erhöhten Aufwand beim Zusammenbau und Auseinanderbau, da jeweils darauf zu achten ist, dass das lose zwischen Membranfeder und Anpressplatte vorgesehene Federelement korrekt installiert wird.

Alternativ zu der Anordnung einer Tellerfeder zwischen Anpressplatte und Membranfeder schlägt die DE 24 37 623 A1 auch vor, eine im Wesentlichen rechteckförmige Blattfeder an der Anpressplatte auf ihrer von den Reibbelägen abgewandten Seite an einem gegenüber der Anpressplattenseite axial vorstehenden Bereich mittels eines Bolzens oder Nietes zu befestigen. An ihrem dem Bolzen gegenüber liegenden Ende ist diese Blattfeder zur Ausbildung eines Beaufschlagungsbereichs für die Membranfeder abgewinkelt ausgebildet. Hierdurch wird bei Beaufschlagung durch die Membranfeder die Blattfeder zunächst elastisch verformt, bis sie bei einer bestimmten Beaufschtagungskraft mit ihrem Beaufschlagungsbereichsende zur Anlage an der Anpressplatte kommt und dann die Membranfeder direkt die Anpressplatte beaufschlagt. Nachteilig an dieser Anordnung ist insbesondere, dass, vor allem im Bereich des Vorsprungsrands, die Blattfeder einer starken Knickbelastung unterliegt, die nach einer entsprechenden Anzahl von Kupplungsbetätigungen zu einem Federbruch führen kann.

Es ist daher die Aufgabe der vorliegenden Erfindung, eine Anpresskraftübertragungsplatte für eine Reibungskupplung bzw. eine eine derartige Anpresskraftübertragungsplatte aufweisende Reibungskupplung bereitzustellen, die über eine Anordnung verfügt, mittels derer die Durchführung von Kuppelvorgängen mit feiner Dosierbarkeit des Kupplungsmoments möglich ist und die im Betrieb außerordentlich verschleißfest ist. Außerdem soll ein Verfahren angegeben werden, durch das eine derartige Anpresskraftübertragungsplatte einfach und kostengünstig herstellbar ist.

Gemäß einem ersten Aspekt der vorliegenden Erfindung wird diese Aufgabe gelöst durch eine Anpresskraftübertragungsplatte für eine Reibungskupplung, umfassend einen ringartigen Plattenkörper und wenigstens einen Beaufschlagungsbereich zur Einleitung einer durch einen Kraftspeicher, vorzugsweise eine Membranfeder, bereitgestellten Kraft. Plattenkörper und Beaufschlagungsbereich sind jeweils durch einen Verbindungsbereich elastisch verbunden, wobei Plattenkörper und Beaufschlagungsbereich eine Schenkelfederanordnung bilden.

Durch die Anordnung als Schenkel- oder Bügelfeder lassen sich bei lediglich geringem Raumbedarf für die Federschenkel und vergleichsweise geringem Materialeinsatz große Kräfte elastisch übertragen. Anpresskraftübertragungsplatte und Beaufschlagungsbereich bilden ein einziges Bauteil, so dass der Montageaufwand nicht größer ist als bei Kupplungen ohne elastisches Element zwischen Membranfeder und Anpresskraftübertragungsplatte. Der Verbindungsbereich zwischen Beaufschlagungsbereich und Plattenkörper wird bei Beaufschlagung elastisch verformt und ermöglicht eine seiner jeweiligen Elastizitätskraft entsprechende feine Dosierung der übertragbaren Anpresskraft, ohne dass starke Knickbelastungen auftreten. Er kann relativ flexibel angeordnet sein, sowohl im zwischen Kraftspeicher und Plattenkörper gebildeten axialen Zwischenraum als auch in radialer Richtung darüber hinausgehend. Dies bietet vielfältige Möglichkeiten für den Kraftfluss zwischen Kraftspeicher und Plattenkörper durch Erzeugung einer elastischen Federkraft im Verbindungsabschnitt. Je nach gewünschter Anforderung können einer oder mehrere Beaufschlagungsbereiche vorgesehen sein, die über entsprechende Verbindungsbereiche mit dem Plattenkörper jeweils unter Bildung einer Schenkelfederanordnung verbunden sind und insgesamt eine Beaufschlagungsbereichsanordnung bilden.

Der Verbindungsbereich kann beispielsweise einen Formfederabschnitt umfassen, der durch entsprechende Veränderung seiner Geometrie selbst eine elastische Rückstellkraft erzeugt, wenn zwischen den Federschenkeln eine entsprechende Beaufschlagungskraft wirkt. Beispielsweise kann der Verbindungsbereich eine bogensegmentförmige Struktur aufweisen, wobei eine durch die Beaufschlagungskraft bewirkte Erhöhung der Krümmung der Biegung zur Erzeugung einer Rückstellkraft führt.

Eine einfache und elegante Herstellungsmöglichkeit der Anpresskraftübertragungsplatte ergibt sich, wenn der Verbindungsbereich in der Art eines elastisch federnden Filmscharniers ausgebildet ist. Filmscharniere sind an sich aus der Kunststofftechnik als Bandscharniere, die keine mechanischen Teile aufweisen, bekannt. Sie umfassen eine flexible, dünnwandige Gelenkrille zwischen zwei zu verbindenden Teilen. Jedoch hat sich herausgestellt, dass bei Ausbildung einer derartigen Struktur zwischen zwei zu verbindenden Metallteilen eine entsprechende Verbindung ausbildbar ist, die nicht nur ausdauernd und verschleißfest ist, sondern die darüber hinaus auch eine ausreichende Elastizität besitzt. Darüber hinaus erfordert die Herstellung einer derartigen Anpressplatte nur wenig Aufwand, weil etwa bereits beim Herstellen eines Plattenkörperrohlings (z.B. durch Gießen, Sintern oder Stanzen eines Blechteils) im Verbindungsbereich zwischen Plattenkörper und dem späteren Beaufschlagungsbereich eine entsprechende rillenoder nutartige Struktur erzeugt werden kann. Alternativ kann diese auch in einem späteren Schritt ohne allzu großen Mehraufwand, beispielsweise durch Prägen, Fräsen oder Drehen, erzeugt werden. Die endgültige Bildung der Anpresskraftübertragungsplatte mit dem Beaufschlagungsbereich lässt sich danach z. B. durch Biegen des Rohlings im Bereich der Rille bzw. Nut realisieren.

Es können mehrere Verbindungsbereiche näherungsweise entlang einer Umfangsrichung des Plattenkörpers aufeinander folgend angeordnet sein, wobei die mehreren Beaufschlagungsbereiche eine Beaufschlagungsbereichsanordnung bilden. Zwischen den einzelnen Verbindungsbereichen, von denen jeder einem eigenen Beaufschlagungsbereich zugeordnet ist, ist dann vorzugsweise ein gewisser Abstand vorgesehen. Hierdurch kann die Beaufschlagung durch den Kraftspeicher derart erfolgen, dass der Kraftfluss relativ gleichmäßig über die Fläche der Anpresskraftübertragungsplatte hinweg verläuft. Die Erstreckung eines einzelnen Verbindungsbereichs in Umfangsrichtung kann relativ klein sein, so dass die bereits erwähnte Herstellung durch Biegen eines radialen Vorsprungs entlang einer Umfangsrichtung ohne weiteres möglich ist.

Die Elastizität der Schenkelfederanordnung kann praktisch vollständig im Verbindungsbereich erzeugt werden. In diesem Fall ist der Beaufschlagungsbereich als starres Bauteil ausgebildet und umfasst einen Federschenkel der Bügelfeder bzw. Schenkelfeder, der unter der Einwirkung einer Beaufschlagungskraft im Wesentlichen, d.h. bis auf eine gewisse unvermeidliche elastische Verformung des Federschenkels bei Beaufschlagung, die aber im Vergleich zum elastischen Verbindungsabschnitt vernachlässigbar ist, nicht verformbar ist. Der andere Federschenkel wird durch den Plattenkörper der Anpresskraftübertragungsplatte gebildet. Es kann hierbei vorgesehen sein, dass der Beaufschlagungsbereich bei unbeaufschlagter Anpresskraftübertragungsplatte in einem vorbestimmten spitzen Winkel zum Plattenkörper angeordnet ist. Bei auf den Beaufschlagungsbereich einwirkender Beaufschlagungskraft verringert sich dementsprechend dieser Winkel, bis durch Verformung des Verbindungsbereichs eine der Anpresskraft entsprechende Elastizitätskraft erzeugt wird. Im Allgemeinen wird hierbei vorgesehen sein, dass die Krafteinleitung durch den Kraftspeicher am vom Verbindungsbereich entfernten Ende des durch den Beaufschlagungsbereich gebildeten Federschenkels erfolgt.

Es kann weiterhin vorgesehen sein, dass der Beaufschlagungsbereich eine Koppelfläche aufweist, in deren Bereich er ab einer vorbestimmten Beaufschlagungskraft, die einer vorbestimmten Motormomentübertragung entspricht, starr mit dem Plattenkörper verbunden ist. Beim Wiedereinkuppeln steigt in der Regel das vom Motor übertragene Drehmoment stetig an, bis ab dem vorbestimmten Motormoment ein im Wesentlichen schlupffreier Betrieb der Kupplung erwünscht ist, bei dem das Kupplungseingangsmoment und das Kupplungsausgangsmoment gleich groß sind. Ab diesem vorbestimmten Kupplungsmoment ist also eine möglichst starre Kopplung des Antriebsstrangs über die Kupplung hinweg anzustreben. Dies bedeutet insbesondere, dass ab dem vorbestimmten Kupplungsmoment die auf die Anpresskraftübertragungsplatte ausgeübte Beaufschlagungskraft zwar mindestens so groß sein muss, wie es zur schlupffreien Übertragung des größten an der Kupplung anliegenden Kupplungsmomentes erforderlich ist, eine direkte Variation der Beaufschlagungskraft in Abhängigkeit vom Kupplungseingangsmoment jedoch nicht mehr in dem genauen Maße eingehalten werden muss, wie dies bei schleifender Kupplung erforderlich ist. Daher ist es völlig ausreichend, wenn die Beaufschlagungskraft direkt vom Kraftspeicher über den Beaufschlagungsbereich auf den starr mit diesem verbundenen Plattenkörper übertragen wird, beispielsweise indem der Beaufschlagungsbereich direkt an den Plattenkörper angepresst wird. Eine derartige Anordnung bietet vor allem den Vorteil, dass der elastisch wirkende Verbindungsbereich ab der vorbestimmten Beaufschlagungskraft entlastet wird, und so der Verschleiß bzw. ein Bruch der Federanordnung verringert bzw. verhindert werden kann.

In der Regel weist der Plattenkörper auf einer - bezogen auf eine Plattenachse - ersten axialen Seite eine Kraftübertragungsfläche auf, die mit der Kupplungsscheibe oder einer weiteren Zwischenplatte zur Kraftübertragung zusammenwirkt. An seiner der ersten axialen Seite gegenüber liegenden zweiten axialen Seite kann wenigstens eine Gegen-Koppelfläche zur Anlage der Koppelfläche des jeweiligen Beaufschlagungsbereichs vorgesehen sein. Es ist insbesondere günstig, wenn die zweite axiale Seite des Plattenkörpers wenigstens in der Umgebung der Gegen-Koppelfläche im Wesentlichen plan ist. Hierdurch wird vermieden, dass bei Anlage der Koppelfläche des Beaufschlagungsbereichs dann, wenn die vorbestimmte Beaufschlagungskraft erreicht wird, der den Beaufschlagungsbereich umfassende Federschenkel gegen eine Kante des Plattenkörpers gepresst wird. Außerdem kann der Beaufschlagungsbereich im Bereich seiner Koppelfläche nicht nur punktweise, sondern im Bereich der gesamten Koppelfläche gegen den Anpressplattenkörper gepresst werden. Hierdurch wird erreicht, dass keine Knickbelastung des entsprechenden Federschenkels auftritt. Im Idealfall ist der Beaufschlagungsbereich sogar an seiner gesamten der zweiten axialen Seite des Plattenkörpers zugewandten Seite als Koppelfläche ausgebildet, die bei einer Beaufschlagungskraft gleich oder größer als die vorbestimmte Beaufschlagungskraft an der zugeordneten Gegen-Koppelfläche der zweiten axialen Seite des Plattenkörpers anliegt.

Verbindungsbereich und Beaufschlagungsbereich können mit dem Plattenkörper integral ausgebildet sein. Insbesondere ist es günstig, wenn Plattenkörper, Verbindungsbereich und Beaufschlagungsbereich aus einem Stück gebildet sind. Entsprechend dem bereits erwähnten Verfahren kann dann zunächst ein Rohling gebildet werden zur Ausbildung des Anpresskraftübertragungsplattenkörpers mit daran radial angeformten Ansätzen. Durch entsprechendes Umformen, z.B. Biegen dieser Ansätze, lassen sich dann die entsprechenden Beaufschlagungsbereiche bilden.

Alternativ kann der Beaufschlagungsbereich auch am Plattenkörper befestigt sein, vorzugsweise am Plattenkörper angeschweißt oder angenietet sein. Die Schweißstelle bzw. Nietstelle ist dann an einer geeigneten Stelle zu bewerkstelligen, in der Regel innerhalb des zwischen Plattenkörper und Beaufschlagungsbereich auszubildenden Verbindungsbereichs.

Bevorzugt ist vorgesehen, dass der Verbindungsbereich jeweils in einem radialen Endbereich des Plattenkörpers ausgebildet ist, besonders bevorzugt in einem radial äußeren Endbereich des Plattenkörpers. In diesem Fall kann dann der Beaufschlagungsbereich in radialer Richtung des Plattenkörpers verlaufen, wobei bei unbeaufschlagter Anpresskraftübertragungsplatte ein spitzer Winkel zwischen Beaufschlagungsbereich und Plattenkörper gebildet ist, so dass insgesamt die Anpresskraftübertragungsplatte nur wenig Raum beansprucht.

Die Erfindung betrifft ferner eine Reibungskupplung, umfassend eine mit einem Antriebsorgan zur gemeinsamen Drehung um eine Drehachse gekoppelte oder zu koppelnde Gehäuseanordnung, eine mit der Gehäuseanordnung drehfest gekoppelte und bezüglich dieser in Richtung der Drehachse verlagerbare, ringartige Anpresskraftübertragungsplatte mit einem Plattenkörper, der - bezogen auf eine Plattenachse - auf einer ersten axialen Seite eine Anpresskraftübertragungsfläche bereitstellt, sowie einen sich an der Gehäuseanordnung abstützenden Kraftspeicher, vorzugsweise eine Membranfeder, durch den die Anpresskraftübertragungsplatte beaufschlagbar ist. Die Anpresskraftübertragungsplatte umfasst wenigstens einen Beaufschlagungsbereich zur Einleitung einer durch den Kraftspeicher bereitgestellten Kraft, wobei Plattenkörper und Beaufschlagungsbereich jeweils durch einen Verbindungsbereich elastisch verbunden sind und wobei Plattenkörper und Beaufschlagungsbereich eine Schenkelfederanordnung bilden.

Darüber hinaus stellt die Erfindung ein Verfahren zur Herstellung einer Anpresskraftübertragungsplatte für eine Reibungskupplung der genannten Art bereit, das die folgenden Schritte umfasst:

a) Herstellen eines Metallrohlings, vorzugsweise eines Blechrohlings, für die Anpresskraftübertragungsplatte unter Ausbildung eines ringartigen Plattenkörpers und wenigstens eines daran angeformten, radial vorstehenden Ansatzes und

b) Umformen des Rohlings zur Ausbildung eines zur Einleitung einer Beaufschlagungskraft durch einen Kraftspeicher ausgebildeten Beaufschlagungsbereichs, der mit dem Plattenkörper über einen elastischen Verbindungsbereich verbunden ist.

Die auf diese Weise hergestellte Anpresskraftübertragungsplatte ist vorzugsweise aus einem Stück hergestellt. Alternativ kann der Rohling auch aus mehreren Bauteilen zusammengesetzt sein, die integral miteinander verbunden sind. Zur Ausbildung des Beaufschlagungsbereichs wird der Rohling unter Beibehaltung von Masse und Stoffzusammenhang, vorzugsweise durch entsprechendes Biegen, derart bearbeitet, dass seine im Wesentlichen plane Gestalt vorzugsweise im Bereich der radialen Ansätze verformt wird. Die Ansätze sind vorzugsweise radial außen angeordnet, so dass durch entsprechendes Biegen in radialer Richtung von außen nach innen verlaufende Beaufschlagungsbereiche gebildet werden können. Der Metallrohling wird bevorzugt aus einem flachen Blechmaterial ausgestanzt, beispielsweise aus einem Stahlblech mit entsprechender Dicke. Das Umformen des Rohlings kann beispielsweise derart geschehen, dass ein jeweiliger Ansatz entlang eines als Verbindungsbereich vorgesehenen radialen Endbereichs des Plattenkörpers, falls erforderlich unter entsprechender Wärmebehandlung, über den Plattenkörper gebogen wird, so dass der entsprechende Beaufschlagungsbereich in einem spitzen Winkel zum Plattenkörper angeordnet ist.

Bei diesem Herstellungsverfahren kann zusätzlich nach Herstellung des Rohlings der folgende Schritt vorgesehen sein: Ausbilden einer Struktur an dem Rohling für je einen Verbindungsbereich zwischen einem jeweiligen Ansatz und dem Plattenkörper. Hierbei kann vorgesehen sein, dass vorzugsweise durch Prägen, Pressen, Drehen oder Fräsen eine im Wesentlichen in Umfangsrichtung des Plattenkörpers verlaufende nutartige oder rillenartige Vertiefung in einem als Verbindungsbereich vorgesehenen radialen Endbereich des Plattenkörpers ausgebildet wird. Beim nachfolgenden Umformvorgang wird dann der entsprechende Ansatz um diese Nut bzw. Rille so weit gebogen, dass sich ein entsprechender radial nach innen verlaufender, bei unbeaufschlagter Anpresskraftübertragungsplatte in einem spitzen Winkel zum Anpressplattenkörper angeordneter Beaufschlagungsbereich ergibt. Auf diese Weise ergibt sich ein Plattenkörper und Beaufschlagungsbereich verbindender elastischer Verbindungsbereich, der in der Art eines Filmscharniers ausgebildet ist.

Die Erfindung wird im Folgenden anhand eines bevorzugten Ausführungsbeispiels im Detail beschrieben. Es zeigt:

Fig. 1 eine Längsschnittansicht einer herkömmlichen Lamellen-Reibungskupplung;

Fig. 2 in einer Längsschnittansicht entsprechend Fig. 1 einen Ausschnitt einer Lamellen-Reibungskupplung mit einer erfindungs gemäßen Anpresskraftübertragungsplatte, auf die keine Beaufschtagungskraft ausgeübt wird;

Fig. 3 die in Fig. 2 gezeigte Lamellen-Reibungskupplung mit maximal beaufschlagter Anpresskraftübertragungsplatte.

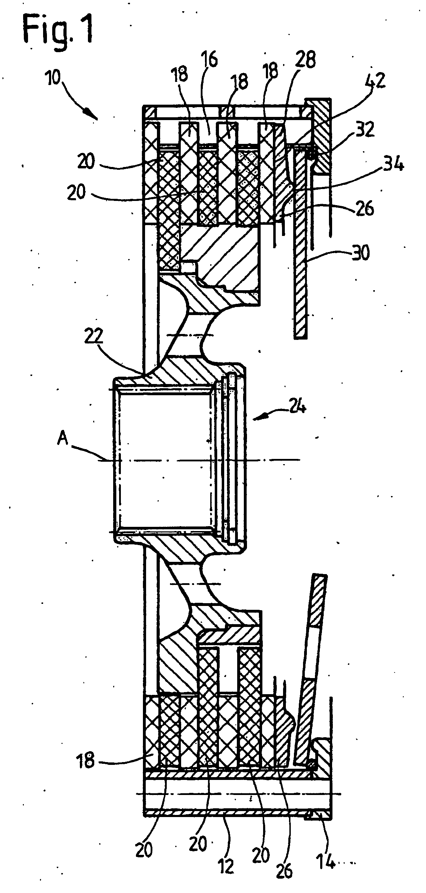

In Fig. 1 ist eine als Lamellenkupplung aufgebaute Reibungskupplung 10 dargestellt. Derartige Reibungskupplungen werden beispietsweise im Motorsport eingesetzt. Die Reibungskupplung 10 umfasst eine Gehäuseanordnung 12, mit welcher ein Gehäusedeckel 14 durch eine Mehrzahl von über den Umfang verteilt angeordneten Schraubbolzen (nicht gezeigt) an einer axialen Endseite (bezogen auf eine Drehachse A) fest verbunden ist. Die Gehäuseanordnung 12 weist an ihrer Innenseite über die Umfangsrichtung verteilt mehrere in Achsrichtung verlaufende Kopplungsvorsprünge 16 auf, mit denen Außenlamellen 18 in Eingriff stehen, so dass die Außenlamellen 18 mit der Gehäuseanordnung 12 zwar drehfest, bezüglich dieser jedoch in Achsrichtung verlagerbar gekoppelt sind. Zwischen mehreren Außenlamellen 18 liegen Innenlamellen 20. Diese sind mit einer Nabenanordnung 22 einer allgemein mit 24 bezeichneten Kupplungsscheibenanordnung wiederum drehfest, in Achsrichtung in gewissem Ausmaß jedoch bewegbar gekoppelt. Die Nabenanordnung 22 kann dann in an sich bekanter Weise an eine Getriebeeingangswelle o.dgl. drehfest angekoppelt werden.

Ebenso wie die Außenlamellen 18 ist auch eine ringförmig ausgebildete Anpresskraftübertragungsplatte 26 mit der Gehäuseanordnung 12 im Bereich der Vorsprünge 16 drehfest gekoppelt. Dazu weist auch die Anpresskraftübertragungsplatte 26 über den Außenumfang verteilt mehrere Kopplungsvorsprünge 28 auf. Ein beispielsweise als Membranfeder ausgebildeter Kraftspeicher 30 ist in seinem radial äußeren Bereich über einen Drahtring 32 o.dgl. am Gehäusedeckel 14 abgestützt und beaufschlagt radial weiter innen einen als Schneide ausgebildeten Beaufschlagungsbereich 34 der Anpresskraftübertragungsplatte 26. Am radial inneren Endbereich des Kraftspeichers 30 kann ein Ausrükkermechanismus zum Ausrücken der Reibungskupplung 10 ziehend angreifen. Im Einrückzustand beaufschlagt der Kraftspeicher 30 die Anpresskraftübertragungsplatte 26, welche diese Beaufschlagungskraft auf eine der Außenlamellen 18 überträgt und damit die Außenlamellen 18 in Reibeingriff mit den Innenlamellen 20 presst. Dabei kann dann eine nicht dargestellte Schwungmassenanordnung, mit welcher die Gehäuseanordnung 12 ebenso wie der Gehäusedeckel 14 fest verbunden werden kann, ein Widerlager bilden. Diese Schwungmassenanordnung kann selbst direkt eine mit einer Innenlamelle 20 zusammenwirkende Reibfläche bereitstellen, kann aber auch lediglich zur Axialabstützung einer der Außenlamellen 18 dienen, so dass, wie im Übrigen auch im Bereich der Anpresskraftübertragungsplatte 26, hier keine Umfangsreibwechselwirkung zur nächstfolgenden Lamelle, nämlich einer. Außenlamelle 18, vorhanden sein wird. Die Membranfeder 30 wirkt direkt auf den Beaufschlagungsbereich 34 der Anpresskraftübertragungsplatte 26 ein, so dass Membranfeder und Anpresskraftübertragungsplatte starr miteinander verbunden sind.

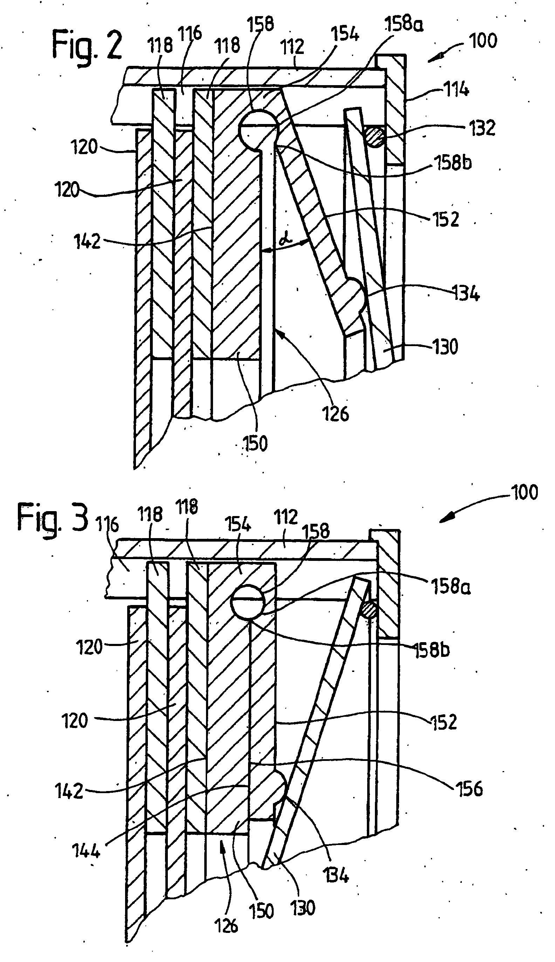

Fig. 2 zeigt in einer Längsschnittansicht entsprechend Fig. 1 einen Ausschnitt einer als Lamellenkupplung ausgebildeten erfindungsgemäßen Reibungskupplung 100, die über eine Anpresskraftübertragungsplatte 126 mit elastisch amAnpresskraftübertragungsplattenkörper 150 angeordnetem Beaufschlagungsbereich 152 verfügt. Auf die in Fig. 2 gezeigte Anpresskraftübertragungsplatte 126 wird keine Beaufschlagungskraft ausgeübt.

Fig. 3 zeigt dieselbe Lamellenkupplung wie Fig. 2, jedoch mit maximal beaufschlagter Anpresskraftübertragungsplatte 126, im Gegensatz zu der in Fig. 2 gezeigten unbeaufschlagten Anpresskraftübertragungsplatte 126. Im Übrigen weisen in den Fig. 2 und 3 Bauteile, die mit solchen in Fig. 1 gezeigten identisch sind, bzw. deren Funktion identisch ist, dieselben Bezugszeichen, jeweils erhöht um 100 auf. Zur Beschreibung dieser Bauteile wird auf die Beschreibung der Fig. 1 verwiesen.

Die in Fig. 2 und 3 gezeigte Anpresskraftübertragungsplatte 126 weist einen im Wesentlichen ringartig ausgebildeten Plattenkörper 150 auf, der an seiner in den Fig. 2 und 3 linken axialen Ringfläche eine Kraftübertragungsfläche 142 umfasst, die mit der Außenlamelle 118 in Reibeingriff steht, bzw. bringbar ist. Weiterhin umfasst die Anpresskraftübertragungsplatte 126 einen Beaufschlagungsbereich 152, der am radial äußeren Ende der Anpresskraftübertragungsplatte 126 mit dem Plattenkörper 150 verbunden ist und an seinem freien, radial inneren Ende einen Schneidenbereich 134 zur Beaufschlagung durch die Membranfeder 130 aufweist. Im radial äußeren Endbereich der Anpresskraftübertragungsplatte 126 ist zwischen Plattenkörper 150 und Beaufschlagungsbereich 152 ein etastischer Verbindungsbereich 154 ausgebildet, dessen Querschnitt geringer ist als derjenige des Plattenkörpers 150 sowie des Beaufschlagungsbereichs 152. Plattenkörper, Verbindungsbereich und Beaufschlagungsbereich sind durch entsprechende Umformung aus einem Metallrohling in einem Stück ausgebildet. Der Verbindungsbereich ist hierbei in der Art eines Filmscharniers ausgebildet.

Bei der erfindungsgemäßen Anpresskraftübertragungsplatte bilden Plattenkörper 150 und Beaufschlagungsbereich 152 zwei Schenkel einer Schenkelfederanordnung bzw. Bügelfederanordnung, die durch den Plattenkörper 150, den Verbindungsbereich 154 und den Beaufschlagungsbereich 152 gebildet ist. Aus Fig. 2 ist ersichtlich, dass bei unbeaufschlagter Anpresskraftübertragungsplatte 126 der Beaufschlagungsbereich 152 in einem spitzen Winkel $\alpha$ zum Plattenkörper 150 angeordnet ist. Im Verbindungsbereich 154 ist eine etwa bogensegmentförmige Aussparung 158 gebildet, in deren Bereich der Querschnitt der Anpresskraftübertragungsplatte 126 gegenüber dem Plattenkörper 150 und dem Beaufschlagungsbereich 152 reduziert ist. Während Plattenkörper 150 und Beaufschlagungsbereich 152 im Wesentlichen starre Federschenkel bilden, sich also unter Einwirkung einer Beaufschlagungskraft durch die Membranfeder 130 verglichen mit dem Verbindungsabschnitt lediglich vernachlässigbar verformen, weist der Verbindungsbereich 154 eine gewisse Elastizität auf. Diese Elastizität rührt daher, dass bei Einwirkung einer Beaufschlagungskraft durch die Meinbranfeder 130 zunächst der Winkel $\alpha$ zwischen Beaufschlagungsbereich 152 und Plattenkörper 150 sich verringert und die beiden Endpunkte 158a und 158b der bogensegmentförmigen Aussparung 158 im Verbindungsbereich 154 sich aufeinander zu bewegen, wodurch die Krümmung des durch die Aussparung gebildeten Bogens erhöht wird. Dies bewirkt gleichzeitig die Erzeugung einer elastischen Rückstellkraft, die im Sinne einer Wiederherstellung des ursprünglichen Winkels $\alpha$ zwischen Beaufschlagungsbereich 152 und Plattenkörper 150 wirkt. Je größer die Beaufschlagungskraft und damit je kleiner der Winkel zwischen Beaufschlagungsbereich 152 und Plattenkörper 150 wird, desto größer wird diese Rückstellkraft und damit auch die insgesamt über die Anpresskraftübertragungsplatte 126 übertragbare Anpresskraft.

Bei Erreichen einer vorbestimmten Beaufschlagungskraft wird schließlich die in Fig. 3 gezeigte Endstellung erreicht. Der Beaufschlagungsbereich 152 liegt nun mit seiner dem Plattenkörper 150 zugewandten axialen Seitenfläche 156 vollständig an der der Kraftübertragungsfläche 142 gegenüber liegenden axialen Ringfläche 144 des Plattenkörpers an. Ein Kraftfluss vom Beaufschlagungsbereich 152 zum Plattenkörper 150 erfolgt nun also nicht mehr über den elastischen Verbindungsbereich 154, sondern direkt über die aneinander anliegenden Flächen 156, 144 des Beaufschlagungsbereichs 152 und des Plattenkörpers 150. Der Verbindungsbereich 154 ist also ab der vorbestimmten Beaufschlagungskraft vollständig entlastet. Daher ist eine Beschädigung bzw. ein Bruch der elastischen Verbindung zwischen Plattenkörper 150 und Beaufschlagungsbereich 152 auch bei sehr hohen Beaufschlagungskräften, wie sie zur Übertragung von hohen Kopplungsmomenten erforderlich sind, ausgeschlossen. Darüber hinaus verhindert auch die relativ großflächige Anlage zwischen der Koppelfläche 156 des Beaufschlagungsbereichs 152 und der Gegen-Koppelfläche 144 des Plattenkörpers 150 eine Beschädigung oder starken Verschleiß der Anpresskraftübertragungsplatte 126 bei hohen und/oder häufig auftretenden Beaufschlagungskräften.

Die erfindungsgemäß vorgesehene Anpresskraftübertragungsplatte 126 kann bei lediglich geringem zusätzlichem Herstellungsaufwand gegenüber einer herkömmlichen Anpresskraftübertragungsplatte gefertigt werden. Sie beansprucht kaum mehr Platz und Gewicht als eine herkömmliche Anpresskraftübertragungsplatte, stellt aber vor allem beim Einkuppeln und Auskuppeln ein deutlich genauer einstellbares übertragbares Kupplungsmoment zur Verfügung. Die elastische Verbindung von Anpressplattenkörper und Beaufschlagungsbereich ergibt ein integrales Bauteil, das einfach montierbar ist und - vor allem wegen der verminderten Knickbelastung und wirksamen Entlastung des elastischen Verbindungsbereichs bei hohen übertragenen Kupplungsmomenten - gleichzeitig außerordentlich verschleißfest ist.

**Patentansprüche**

1. Anpresskraftübertragungsplatte (126) für eine Reibungskupplung, umfassend

   - einen ringartigen Plattenkörper (150) und
   - wenigstens einen Beaufschlagungsbereich (152) zur Einleitung einer durch einen Kraftspeicher (130), vorzugsweise eine Membranfeder, bereitgestellten Kraft,

   wobei Plattenkörper (150) und Beaufschlagungsbereich (152) jeweils durch einen Verbindungsbereich (154) elastisch verbunden sind und wobei Platten körper (150) und Beaufschlagungsbereich (152) eine Schenkelfederanordnung bilden.

2. Anpresskraftübertragungsplatte nach Anspruch 1, **dadurch gekennzeichnet, dass** der Verbindungsbereich (154) einen Formfederabschnitt (158) umfasst.

3. Anpresskraftübertragungsplatte nach Anspruch 1 oder 2, **dadurch gekennzeichnet, dass** der Verbindungsbereich (154) in der Art eines elastisch federnden Filmscharniers ausgebildet ist.

4. Anpresskraftübertragungsplatte nach einem der Ansprüche 1 bis 3; **dadurch gekennzeichnet, dass** mehrere Beaufschiagungsbereiche (152) eine Beaufschlagungsbereichsanordnung- bilden, wobei mehrere Verbindungsbereiche (154) näherungsweise entlang einer Umfangsrichtung des Plattenkörpers (150) aufeinanderfolgend angeordnet sind.

5. Anpresskraftübertragungsplatte nach einem der Ansprüche 1 bis 4, **dadurch gekennzeichnet, dass** der Beaufschlagungsbereich (152) einen Federschenkel umfasst, der unter der Einwirkung einer Beaufschlagungskraft nicht verformbar ist, und der andere Federschenkel durch den Plattenkörper (150) gebildet ist.

6. Anpresskraftübertragungsungsplatte nach einem der Ansprüche 1 bis 5, **dadurch gekennzeichnet, dass** der Beaufschlagungsbereich (152) bei unbeaufschlagter Anpresskraftübertragungsungsplatte in einem vorbestimmten spitzen Winkel ($\alpha$) zum Plattenkörper (150) angeordnet ist.

7. Anpresskraftübertragungsplatte nach einem der Ansprüche 1 bis 6, **dadurch gekennzeichnet, dass** der Beaufschlagungsbereich (152) eine Koppelfläche (156) aufweist, in deren Bereich er ab einer vorbestimmten Beaufschlagungskraft, die einer vorbestimmten Motormomentübertragung entspricht, starr mit dem Platten-körper (152) verbunden ist.

8. Anpresskraftübertragungsplatte nach Anspruch 7, **dadurch gekennzeichnet, dass** der Plattenkörper (150) an einer bezogen auf eine Plattenachse - ersten axialen Seite eine Kraftübertragungsfläche (142) aufweist und an einer der ersten axialen Seite gegenüberliegenden zweiten axialen Seite wenigstens eine Gegen-Koppelfläche (144) zur Anlage der Koppelfäche (156) des jeweiligen Beaufschlagungsbereichs (152) aufweist.

9. Anpresskraftübertragungsplatte nach Anspruch 8, **dadurch gekennzeichnet, dass** die zweite axiale Seite des Plattenkörpers (150) wenigstens in der Umgebung der Gegen-Koppelfäche (144) im Wesentlichen plan ist.

10. Anpresskraftübertragungsplatte nach Anspruch 9, **dadurch gekennzeichnet, dass** der Beaufschlagungsbereich (152) an seiner gesamten der zweiten axialen Seite des Plattenkörpers (150) zugewandten Seite als Koppelfläche (156) ausgebildet ist, die bei einer Beaufschlagungskraft gleich oder größer als die vorbestimmte Beaufschiegungskraft an der zugeordneten Gegen-Koppelfläche (144) der zweiten axialen Seite des Plattenkörpers (150) anliegt.

11. Anpresskraftübertragungsplatte nach einem der Ansprüche 1 bis 10, **dadurch gekennzeichnet, dass** Verbindungsbereich (154) und Beaufschiagungsbereich (152) mit dem Plattenkörper (150) integral ausgebildet sind.

**12.** Anpresskraftübertragungsplatte nach einem der Anspruch 11,
**dadurch gekennzeichnet, dass** Plattenkörper (150), Verbindungsbereich (154) und Beaufschlagungsbereich (152) aus einem Stück gebildet sind.

**13.** Anpresskraftübertagungsplatte nach Anspruch 11,
**dadurch gekennzeichnet, dass** der Beaufschlagungsbereich (152) am Plattenkörper (150) befestigt ist, vorzugsweise angeschweißt oder. angenietet ist.

**14.** Anpresskraftübertragungsplatte nach einem der Ansprüche 1 bis 13,
**dadurch gekennzeichnet, dass** der Verbindungsbereich (154) jeweils in einem radialen Endbereich des Plattenkörpers (150) ausgebildet ist.

**15.** Reibungskupplung, umfassend

- eine mit einem Antriebsorgan zur gemeinsamen Drehung um eine Drehachse gekoppelte oder zu koppelnde Gehäuseanordnung (12, 14),
- eine mit der Gehäuseanordnung (12, 14) drehfest gekoppelte. und bezüglich dieser in Richtung der Drehachse (A) verlagerbare, ringartige Anpresskraftübertragungsplatte (126) mit einem Plattenkörper (150), der - bezogen auf eine Plattenachse (A) - auf einer ersten axialen Seite eine Anpresskraftübertragungsfläche (142) bereitstellt, und
- einen sich an der Gehäuseanordnung (12,14) abstützenden Kraftspeicher (134), vorzugsweise eine Membranfeder, durch den die Anpresskraftübertragungsplatte (126) beaufschlagbar ist,

  wobei die Anpresskraftübertragungsplatte (126) wenigstens einen Beaufschlagungsbereich (152) zur Einleitung einer durch den Kraftspeicher (134) bereitgestellten Kraft umfasst, wobei Plattenkörper (150) und Beaufschlagungsbereich (152) jeweils durch einen Verbindungsbereich (154) elastisch verbunden sind und wobei Plattenkörper (150) und Beaufschlagungsbereich (152) eine Schenkelfederanordnung bilden.

**16.** Verfahren zur Herstellung einer Anpresskraftübertragungsplatte (126) für eine Reibungskupplung, umfassend die Schritte:

  a) Herstellen eines Metallrohlings, vorzugsweise eines Blechrohlings, für die Anpresskraftübertragungsplatte (126) unter Ausbildung eines ringartigen Plattenkörpers (150) und wenigstens eines daran angeformten, radial vorstehenden Ansatzes und

  b) Umformen des Rohlings zur Ausbildung eines zur Einleitung einer Beaufschlagungskraft durch einen Kraftspeicher ausgebildeten Beaufschlagungsbereichs (152), der mit dem Plattenkörper (150) über einen Verbindungsbereich (154) elastisch verbunden ist.

**17.** Verfahren nach Anspruch 16,
**dadurch gekennzeichnet, dass** in Schritt a) der Rohling aus einem Blechmaterial ausgestanzt wird.

**18.** Verfahren nach Anspruch 16 oder 17,
**dadurch gekennzeichnet, dass** in Schritt b) ein jeweiliger Ansatz entlang eines als Verbindungsbereich (154) vorgesehenen radialen Endbereichs des Plattenkörpers über den Plattenkörper (150) gebogen wird, so dass der entsprechende Beaufschlagungsbereich (152) in einem spitzen Winkel (α) zum Plattenkörper (150) angeordnet ist.

**19.** Verfahren nach einem der Ansprüche 16 bis 18,
**dadurch gekennzeichnet, dass** nach Schritt a) der folgende Schritt durchgeführt wird:

  ab) Ausbilden einer Struktur an dem Rohling für je einen Verbindungsbereich (154) zwischen einem jeweiligen Ansatz und dem Plattenkörper (150).

**20.** Verfahren nach Anspruch 19,
**dadurch gekennzeichnet, dass** in Schritt ab) - vorzugsweise durch Prägen, Pressen, Drehen oder Fräsen - eine im Wesentlichen in Umfangsrichtung des Plattenkörpers (150) verlaufende nutartige Vertiefung in dem als Verbindungsbereich (154) vorgesehenen radialen Endbereich des Plattenkörpers (150) ausgebildet wird.

## Fig. 1

Fig. 2

Fig. 3

**Europäisches**
**Patentamt**

# EUROPÄISCHER RECHERCHENBERICHT

Nummer der Anmeldung

EP 04 01 4431

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | EP 0 797 016 A (EXEDY CORP) 24. September 1997 (1997-09-24) * Abbildung 11 * ----- | 1,15,16 | F16D13/58 F16D13/52 F16D13/71 |
| A | GB 321 137 A (EDOUARD JEAN DESROZIERS) 31. Oktober 1929 (1929-10-31) * das ganze Dokument * ----- | 1,15,16 | |
| A | GB 2 182 401 A (AUTOMOTIVE PRODUCTS PLC) 13. Mai 1987 (1987-05-13) * Anspruch 1; Abbildung 1 * ----- | 1,15,16 | |
| A | US 4 770 282 A (MAYCOCK IAN C ET AL) 13. September 1988 (1988-09-13) * Zusammenfassung; Abbildung 1 * ----- | 1,15,16 | |

| | |
|---|---|
| | RECHERCHIERTE SACHGEBIETE (Int.Cl.7) |
| | F16D |

Der vorliegende Recherchenbericht wurde für alle Patentansprüche erstellt

| Recherchenort | Abschlußdatum der Recherche | Prüfer |
|---|---|---|
| München | 6. September 2004 | Foulger, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 04 01 4431

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-09-2004

| Im Recherchenbericht angeführtes Patentdokument | | Datum der Veröffentlichung | Mitglied(er) der Patentfamilie | | Datum der Veröffentlichung |
|---|---|---|---|---|---|
| EP 0797016 | A | 24-09-1997 | JP | 9250556 A | 22-09-1997 |
| | | | JP | 9250558 A | 22-09-1997 |
| | | | JP | 9250559 A | 22-09-1997 |
| | | | JP | 3372165 B2 | 27-01-2003 |
| | | | JP | 9264334 A | 07-10-1997 |
| | | | JP | 3447176 B2 | 16-09-2003 |
| | | | JP | 9317788 A | 09-12-1997 |
| | | | DE | 69712958 D1 | 11-07-2002 |
| | | | DE | 69712958 T2 | 14-11-2002 |
| | | | DE | 69717174 D1 | 19-12-2002 |
| | | | DE | 69717174 T2 | 03-04-2003 |
| | | | DE | 69718688 D1 | 27-02-2003 |
| | | | DE | 69718688 T2 | 22-05-2003 |
| | | | EP | 1111261 A2 | 27-06-2001 |
| | | | EP | 1116893 A2 | 18-07-2001 |
| | | | EP | 0797016 A2 | 24-09-1997 |
| | | | US | 5975269 A | 02-11-1999 |
| | | | US | 6021878 A | 08-02-2000 |
| | | | US | 6116397 A | 12-09-2000 |
| | | | US | 6116398 A | 12-09-2000 |
| | | | US | 5904234 A | 18-05-1999 |
| GB 321137 | A | 31-10-1929 | KEINE | | |
| GB 2182401 | A | 13-05-1987 | AU | 589697 B2 | 19-10-1989 |
| | | | AU | 6447586 A | 30-04-1987 |
| | | | EP | 0227208 A1 | 01-07-1987 |
| | | | JP | 62101919 A | 12-05-1987 |
| | | | US | 4744448 A | 17-05-1988 |
| US 4770282 | A | 13-09-1988 | GB | 2187519 A | 09-09-1987 |
| | | | EP | 0235882 A2 | 09-09-1987 |
| | | | JP | 62224729 A | 02-10-1987 |

EPO FORM P0461

Für nähere Einzelheiten zu diesem Anhang : siehe Amtsblatt des Europäischen Patentamts, Nr.12/82